# EUROPÄISCHE PATENTSCHRIFT

(11) **EP 1 259 746 B1**
(45) Veröffentlichungstag und Bekanntmachung des Hinweises auf die Patenterteilung: **23.02.2005**
(21) Anmeldenummer: 00963986.5
(22) Anmeldetag: 13.09.2000
(51) Int. Cl.: F16H 7/06, B21C 1/30

(54) **ANTRIEB FÜR EINE KETTE MIT PERIODISCH ANGEORDNETEN KETTENGLIEDERN**
DRIVE FOR A CHAIN COMPRISING PERIODICALLY ARRANGED CHAIN LINKS
MECANISME D'ENTRAINEMENT DE CHAINE A MAILLONS DISPOSES DE MANIERE PERIODIQUE

(30) Priorität: 01.03.2000 DE 10009808
(43) Veröffentlichungstag der Anmeldung: 27.11.2002
(73) Patentinhaber: Schumag Aktiengesellschaft, D-52076 Aachen (DE)
(72) Erfinder: HESSBERGER, Dirk, 52078 Aachen (DE)
(74) Vertreter: Castell, Klaus, Dr.-Ing.
(86) Internationale Anmeldenummer: PCT/DE2000/003186
(87) Internationale Veröffentlichungsnummer: WO 2001/065145

(56) Entgegenhaltungen:
- EP-A- 0 860 216
- WO-A-86/05456
- DE-A- 1 625 081
- DE-C- 240 785
- DE-C- 512 013
- DE-C- 520 771
- DE-C- 576 950
- DE-C- 931 577
- GB-A- 521 249
- GB-A- 2 243 430
- PATENT ABSTRACTS OF JAPAN vol. 005, no. 190 (M-100), 4. Dezember 1981 (1981-12-04) -& JP 56 112368 A (KOMATSU LTD), 4. September 1981 (1981-09-04)

## Beschreibung

Die Erfindung betrifft einen Antrieb für eine Kette gemäß den Oberbegriff des Anspruchs 1.

Bei derartigen Antrieben, insbesondere bei Antrieben für Ziehmaschinen, besteht die Problematik, eine umlaufende Bewegung in eine Linearbewegung, insbesondere zum Ziehen des Ziehguts, umzusetzen. Hierbei kann es zu Bewegungsartefakten kommen, die sich einerseits störend auf einen Gleichlauf der Kette, insbesondere auch des Ziehguts, und andererseits als schwer beherrschbar von dem Antriebsmotor erweisen. Ein Beispiel hierfür ist der nachfolgend näher beschriebene Polygoneffekt, der bei Verwendung einer Kette zum Ziehen des Ziehguts auftritt.

Da die Einzelglieder bzw. Verbindungsglieder einer Kette starr sind, kann sich die Kette dem Teilkreis des Kettenrades nur polygonförmig anpassen. Der Hebelarm einer auf den Kettenstrang ausgeübten Kraft ändert sich dadurch mit dem Drehwinkel des Kettenrades, wodurch das Lastmoment und die in Kettenzugrichtung resultierende Vortriebsgeschwindigkeit der Kette periodisch schwanken. Neben den Last- und Geschwindigkeitsschwankungen werden auch Schwankungen der Kette in der Laufhöhe angeregt, die insgesamt zu unerwünschten Schwingungen in der Maschine und dadurch zu höherem Verschleiß des gesamten Kettenantriebs führen können. Bei der Auslegung des Antriebs für ein Kettenrad bzw. für einen Kettentrieb muss daher dieser sogenannte Polygoneffekt berücksichtigt werden.

Um dem Polygoneffekt entgegenzuwirken, sind im Stand der Technik bisher eine Vielzahl von technischen Lösungen vorgeschlagen worden. Eine Kompensation des Polygoneffektes kann z.B. dadurch erzielt werden, dass vergleichsweise große Kettenräder mit einer hohen Zähnezahl verwendet werden. Maschinen mit großen Kettenrädern zeigen zwar einen vergleichsweise ruhigen Lauf, dies wird allerdings mit einer Vergrößerung des für den Antrieb benötigten Bauraumes und mit einer Erhöhung der Anzahl der Kettenglieder bzw. mit höheren Kosten erkauft, so dass auch das Gewicht der Kette und damit die zu installierende Antriebsleistung steigt.

Weiter ist es aus dem Stand der Technik bekannt, als Ausgleichsmittel zur Kompensation des Polygoneffektes eine spezielle Kettenführung vorzusehen, mit der die Kette derart an das Kettenrad herangeführt wird, dass sich der Effekt der starren Kettenglieder nur weniger stark auswirkt.

Beispielsweise in Kettenziehvorrichtungen zum Ziehen von Voll-, Rohr-, Rund - und Profilmaterial, im folgenden Ziehgut genannt mit einer umlaufenden Kette kann der Polygoneffekt erheblichen Einfluss auf die Qualität des gezogenen Ziehguts haben, da sich Geschwindigkeitsschwankungen und Schwingungen unmittelbar auf die Homogenität des Ziehprozesses, die Güte der Oberfläche des Ziehgutes und die Längentoleranzen des gezogenen Materials auswirken. In einem kontinuierlichen Ziehprozess wird das Ziehgut mit speziellen Greifwerkzeugen gegriffen und mit den umlaufenden Treibkettenpaaren gezogen. Eine derartige kontinuierliche Ziehvorrichtung ist z.B. aus dem Patent EP 0 433 767 B1 bekannt. Bei dieser Kettenziehmaschine wurde keine Ausgleichsvorrichtung zum Ausgleich der durch den Polygoneffekt verursachten Geschwindigkeitsschwankungen der Treibketten vorgesehen.

Aus der EP 0 860 216 A1 ist ein Antrieb für eine kontinuierliche Ziehvorrichtung bekannt, bei welchem dem Polygoneffekt bereits Rechnung getragen wurde. Bei dem gattungsgemäßen Antrieb ist in den Antriebsstrang zwischen dem Antriebsmotor und den angetriebenen Kettenrädern ein Übersetzungsgetriebe geschaltet. Die Antriebswelle des Übersetzungsgetriebes ist mit der Motorwelle des Antriebsmotors über ein Kreuzkopfgelenk verbunden und um einen Winkel verschwenkt eingebaut. Durch das Kreuzkopfgelenk wird bei zueinander verschwenkter An- und Antriebswelle eine Unregelmäßigkeit der Umfangsgeschwindigkeiten erzielt, die zur Kompensation des Polygoneffektes ausgenutzt werden soll. Der Ausgleichseffekt dieses Antriebs hängt entscheidend von der Einstellung des Winkel zwischen der An- und Abtriebswelle ab. Ein derartiger Antrieb erfordert daher einerseits eine genaue Justage des Winkels, andererseits eine regelmäßige Überwachung der Einstellung, da bei einer ungünstigen Fehlstellung des Winkels statt einer Kompensation eine Verstärkung des Polygoneffektes erzeugt wird. Der hierdurch bedingte Bauraum erhöht die Kosten zudem. Für den praktischen Einsatz zum gleichmäßigen Bewegen einer Kette, insbesondere in einer Ziehvorrichtung, ist der aus der EP 0 860 216 A1 bekannte Antrieb daher wenig geeignet.

Mit der Erfindung soll ein Antrieb geschaffen werden, der mit einfachen Mitteln eine betriebssichere Kompensation von derartigen Bewegungsartefakten, insbesondere des Polygoneffektes, bewirkt.

Erfindungsgemäß ist die obige Aufgabe mit den Merkmalen des Anspruchs 1 gelöst.

Durch die Auswahl geeigneter Unrundräder wird am abtriebsseitigen Unrundrad eine resultierende, abgegebene Drehzahl erzeugt, mit der der Polygoneffekt vollständig kompensiert werden kann, so dass keine oder nur geringfügige Geschwindigkeitsschwankungen in der Kette, insbesondere im ziehenden Kettenstrang auftreten. Insbesondere wird dadurch eine gleichbleibende Qualität des gezogenen Materials gesichert. Mit den miteinander wechselwirkenden Unrundrädern können bei konstanter Antriebsdrehzahl des Antriebsmotors die Abtriebsdrehzahlen des abtriebsseitigen Unrundzahnrades auf den Polygoneffekt eingestellt werden. Die Auswahl der Geometrien der Unrundräder erfolgt in Abhängigkeit von der Zähnezahl des Kettenrades und der Gestalt der Kettenglieder. Der erfindungsgemäße Antrieb bewirkt selbst bei Kettenrädern mit nur wenigen Kettenzähnen eine nahezu vollständige Kompensation des Polygoneffektes.

Um einen völligen oder zumindestens einen nahezu völligen Gleichlauf der Kette zu erhalten, ist es besonders vorteilhaft, wenn die Periodizität des antriebsseitigen Unrundrades auf die Periodizität der umlaufenden Kette in definierter Weise aufeinander abgestimmt ist. Dies geschieht dadurch, dass der Umfang wenigstens eines der Unrundräder eine Periodizität einer Winkelfunktion r (ϕ) aufweist und diese Periodizität der Periodizität der Kettenglieder entspricht. Dabei versteht es sich von selbst, dass zwischen den Unrundrädern und dem Kettenrad bzw. den Kettenrädern entsprechende Getriebeglieder angeordnet sein können, die auf die Übersetzung des Antriebes wirken können.

Die Erfindung eignet sich insbesondere somit für Zielmaschinen, bei welchen der Antrieb ein mehrere Kettenzähne aufweisendes Kettenrad, insbesondere ein Kettenrad einer Kettenziehvorrichtung, umfasst, welches eine, vorzugsweise endlos umlaufende, Kette antreibt.

Da der Polygoneffekt periodisch auftritt, erfolgt die Auslegung der Unrundräder vorzugsweise dergestalt, dass die Wälzkufe eines jeden Unrundrades jeweils aus mehreren Wälzkreissegmenten mit gleichförmigen Wälzkurvenabschnitten zusammengesetzt ist. Die Wälzkurvenabschnitte des antriebsseitigen und des abtriebsseitigen Unrundrades sollten gleiche Wälzkurvenlängen aufweisen, so dass die Wälzkurvenabschnitte und mithin die Unrundräder gleichmäßig aufeinander abrollen und eine periodische Schwankung der Abtriebsdrehzahl des abtriebsseitigen Unrundrades ermöglichen.

Es versteht sich, dass auch eine nicht periodische Wälzkurve an dem Unrundrad vorgesehen sein kann, wobei dann die notwendige Periodizität durch genau einen Umlauf des Unrundrades gewährleistet ist.

Weiter vorteilhaft ist es, wenn das antriebsseitige Unrundrad weniger Wälzkreissegmente als das abtriebsseitige Unrundrad aufweist, so dass ein Antriebsmotor mit hohen Antriebsdrehzahlen eingesetzt werden kann.

Bei einer ersten Ausführungsalternative entspricht die Anzahl der Wälzkreissegmente des abtriebsseitigen Unrundrades der Anzahl der Kettenzähne. Bei einem derartigen Antrieb kann dann das abtriebsseitige Unrundrad wahlweise mit dem Kettenrad auf einer gemeinsamen Welle angeordnet sein oder durch ein Zahnradgetriebe oder ein Transmissionsmittel, wie z.B. einem Zahnriemen, mit dem Kettenrad gekoppelt sein.

Bei einer alternativen Ausführungsform ist zwischen dem abtriebsseitigen Unrundrad und dem Kettenrad ein Übersetzungsgetriebe zwischengeschaltet, dessen Übersetzungsverhältnis iₖ sich aus dem Verhältnis der Anzahl der Wälzkreissegmente des abtriebsseitigen Unrundrades und der Kettenzähne des Kettenrades bzw. aus dem Verhältnis des Winkels, über den sich die Wälzkreissegmente des abtriebsseitigen Unrundrades erstrecken, und dem Teilungswinkel des Kettenrades ergibt. Vorteilhafterweise ist das Übersetzungsverhältnis ganzzahlig. Bei dem Übersetzungsgetriebe kann es sich um ein ein- oder mehrstufiges Zwischengetriebe handeln. Insbesondere kann das Übersetzungsverhältnis iₖ ganzzahlig durch die Zähnezahl teilbar sein.

Das abtriebsseitige Unrundrad ist vorzugsweise derart konstruiert, dass seine Wälzkurvenabschnitte zwei Wendepunkte haben. Hierdurch lassen sich insbesondere harte Schläge beim Übergang zwischen Wälzkurvenabschnitten vermeiden bzw. in ihrer Wirkung reduzieren. Vorzugsweise liegen die Wendepunkte in der Nähe des minimalen oder des maximalen Radialabstandes. Jeder Wälzkurvenabschnitt weist dann in der Mitte einen minimalen Radialabstand von der Drehachse des Unrundrades und an den Übergängen zu den nächsten Wälzkreissegmenten maximale Radialabstände von der Drehachse auf. Der Abstand zwischen den Drehachsen der Unrundräder ist vorzugsweise konstant.

Weiter vorteilhaft ist es, wenn die Unrundräder als Zahnräder ausgebildet sind, da mit Zahnrädern ein sicherer Ablauf der Wälzkreissegmente aufeinander ohne die Gefahr von Gleiten zwischen den Unrundrädern ermöglicht wird.

Insbesondere für Kettenziehvorrichtungen, mit denen Ziehgut mit besonders hohen Qualitätsanforderungen an gleichbleibende Dicken gezogen werden sollen, kann als weiteres Ausgleichsmittel zur Kompensation des Polygoneffektes eine spezielle Kettenführung der Kette an das Kettenrad heran vorgesehen sein. Hierbei werden die Wälzkurven der Unrundräder entsprechend des durch die Ausgleichsmittel verringerten Polygoneffektes angepasst.

Als weitere Lösung schlägt vorliegende Erfindung ein Verfahren gemäß Anspruch 15 vor.

Durch das erfindungsgemäße Verfahren wird ermöglicht, dass ein Bauteil, welches bedingt durch seine konstruktive Gestaltung ansonsten nur mit hohen konstruktiven Aufwand in eine mit dem Polygoneffekt behaftete Bewegung versetzt werden kann, nun auch eine gleichmäßige Bewegung erfährt.

Es ist selbsterklärend, dass der erfindungsgemäße Kettenantrieb auch für Kettentriebe von Maschinen oder Vorrichtungen gebraucht werden kann, die nicht direkt als Ziehmaschinen verwendet werden, jedoch aber der Polygoneffekt einen Nachteil in der gleichmäßigen Bewegung des Antriebs solcher Maschinen oder Vorrichtungen haben kann.

Weitere Vorteile, Ziele und Eigenschaften vorliegender Erfindung werden anhand nachfolgender Erläuterungen anliegender Zeichnung dargestellt, in welcher beispielhaft in einer rein schematischen Darstellung der Aufbau des erfindungsgemäßen Antriebs für zwei verschiedene Ausführungsformen dargestellt ist.

In der Zeichnung zeigt
- Figur 1: schematisch einen erfindungsgemäßen Antriebsstrang ohne Übersetzungsgetriebe; und
- Figur 2: einen erfindungsgemäßen Antriebsstrang mit Übersetzungsgetriebe zwischen den Unrundzahnrädern und dem Kettenrad.

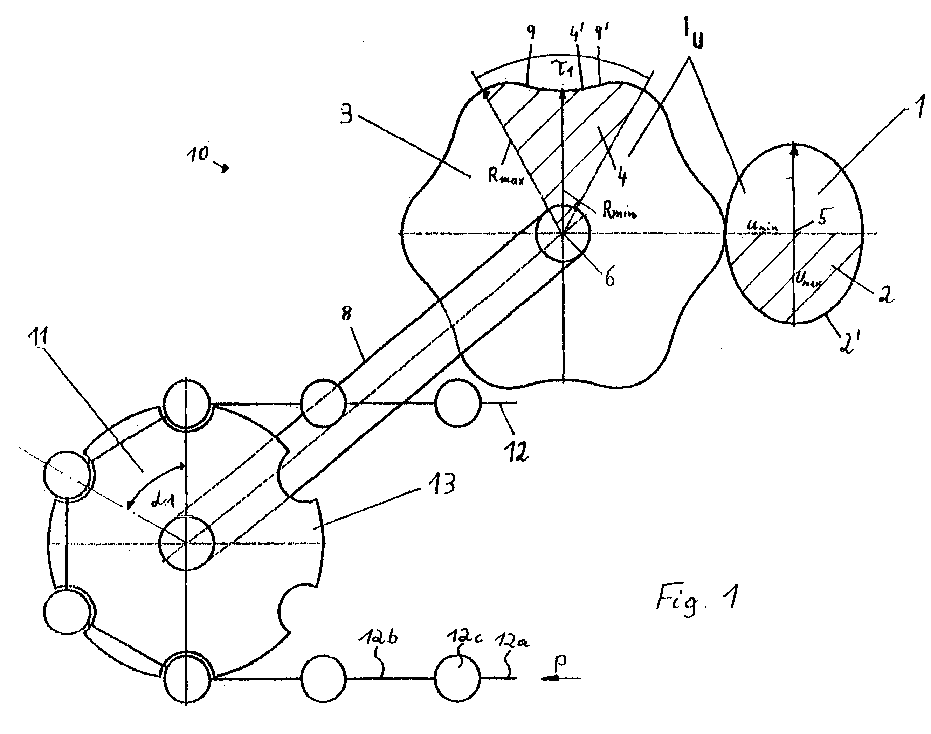

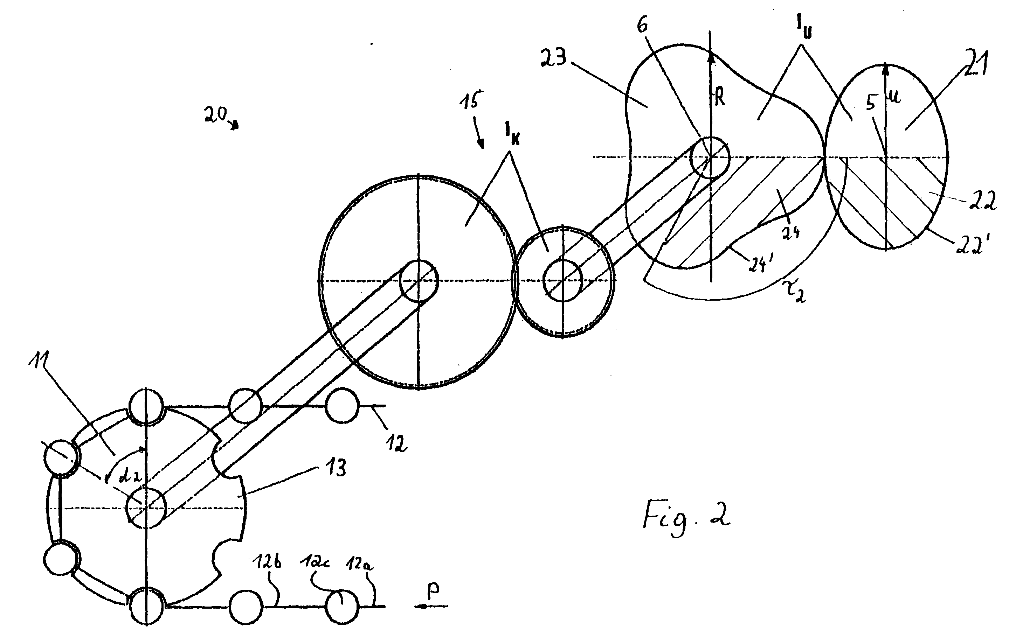

In den Figuren 1 und 2 sind in einer rein schematischen Darstellung nur die zum Ausgleich des Polygoneffektes notwendigen Bauteile eines insgesamt mit 10 in Fig. 1 bzw. 20 in Fig. 2 bezeichneten Antriebsstrangs dargestellt. Der Antriebsstrang dient zum Antreiben des Kettenrades 11 einer ansonsten nicht weiter dargestellten Ziehvorrichtung. Mit dem Kettenrad 11 wird eine Kette 12 in Richtung des Pfeiles P gezogen. Die Ziehkette 12 besteht aus gelenkig miteinander über Bolzen 12c verbundenen Kettengliedern 12a, 12b, wobei die Zähne 13 des Kettenrades 11 an den Bolzen 12c angreifen. Es versteht sich, dass auch eine andere konkrete Ausgestaltung des Kettenantriebes gewählt werden kann. An der Kette 12 sind die nicht dargestellten Greifvorrichtungen zum Ziehen des nicht gezeigten Ziehgutes befestigt. In Ziehvorrichtungen erfolgt das Ziehen des Materials meist mit Triebkettenpaaren, d.h. mit mindestens zwei parallel zueinander laufenden Ketten.

Im Antriebsstrang 10 in Fig. 1 ist ein antriebsseitiges Unrundzahnrad 1 mit einem nicht gezeigten Antriebsmotor drehfest verbunden. Das antriebsseitige Unrundzahnrad 1 ist bei diesem Ausführungsbeispiel aus zwei gleichförmigen Wälzkreissegmenten 2 zusammengesetzt, von denen eines schraffiert gezeigt ist. Hierbei weicht die Form leicht von der idealen Grundform einer Ellipse ab und ist an die gewünschten Geschwindigkeitsverhältnisse angepasst. Das antriebsseifige Unrundzahnrad 1 ist über seine nicht näher dargestellte Verzahnung mit der Verzahnung des abtriebsseitigen Unrundzahnrades 3 in Eingriff. Dieses weist insgesamt 6 zueinander gleichförmige Wälzkreissegmente 4 auf, von denen eines schraffiert dargestellt ist.

Es versteht sich, dass die einzelnen Unrundzahnräder aus einem Stück bestehen bzw. gefertigt sein können und sich die Bezeichnung Wälzkreissegmente nur auf den gleichförmigen Aufbau der einzelnen Unrundzahnräder bezieht.

Das Wälzkreissegment 2 des Unrundzahnrades 1 hat einen Wälzkurvenabschnitt 2', der die gleiche Bogenlänge beziehungsweise Wälzkurvenlänge wie der Wälzkurvenabschnitt 4' des Wälzkreissegmentes 4 des abtriebsseitigen Unrundzahnrades 3 aufweist. Weiterhin ist der Abstand zwischen der Drehachse 5 des Unrundrades 1 und der Drehachse 6 des Unrundrades 3 konstant. Die Wälzkurve bzw. der Umfang des Unrundrades 3 kann daher aus der konstanten Summe des Erzeugendenradius R des Unrundrades 3 und des Erzeugendenradius U des Unrundrades 1 ermittelt werden.

Um den im Betrieb des Antriebsstrangs 10 am Kettenrad 11 auftretenden Polygoneffekt auszugleichen, hat der Wälzkurvenabschnitt 4' des Wälzkreissegmentes 4 des abtriebsseitigen Unrundzahnrades 3 zwei Wendepunkte 9, 9', sowie einen Wälzkurvenpunkt mit minimalem Radialabstand Rmin in der Mitte des Wälzkurvenabschnitts 4' und zwei Wälzkurvenpunkte mit maximalem Radialabstand Rmax. Hierbei ist die Lage der Wendepunkte in den Figuren nicht maßstabgetreu dargestellt. Das Unrundzahnrad 1 ist derart mit dem Unrundzahnrad 3 in Eingriff gesetzt, dass sich die Wälzkurven einerseits berühren, wenn der minimale Radialabstand des Unrundrades 1 Uₘᵢₙ mit dem maximalen Radialabstand Rₘₐₓ des Unrundzahnrades 3 zusammentrifft, und andererseits berühren, wenn der maximale Radialabstand des Unrundrades 1 Uₘₐₓ auf den minimalen Radialabstand Rₘᵢₙ trifft. Die Drehzahl des abtriebsseitigen Unrundrades 3 ist dann minimal, wenn, wie in Fig. 1 gezeigt, minimaler Radialabstand Uₘᵢₙ und maximaler Radialabstand Rₘₐₓ zusammentreffen bzw. maximal, wenn maximaler Radialabstand Uₘₐₓ und minimaler Radialabstand Rₘᵢₙ zusammentreffen. Die Kopplung des abtriebsseitigen Unrundzahnrades 3 mit dem Kettenrad 11 ist zur Kompensation nun derart ausgeführt, dass die Drehzahl des abtriebsseitigen Unrundzahnrades 3 einen minimalen Wert hat, wenn sich das Kettenrad 11, wie in Fig. 1 gezeigt, in einer Winkelstellung befindet, in der bei theoretisch konstanter Antriebsdrehzahl des Kettenrades 11 aufgrund des Polygoneffecktes eine maximale Kettenvorschubgeschwindigkeit in Richtung p resultieren würde. Tatsächlich ist aber aufgrund der miteinander kämmenden Unrundräder 1,3 die Abtriebsdrehzahl des abtriebsseitigen Unrundzahnrades 3 gerade minimal, so dass sich insgesamt der Polygoneffekt und die mit den Unrundzahnrädern 1, 3 erzeugten Drehzahlschwankungen gegeneinander aufheben, so dass eine absolut gleichförmige Kettenzuggeschwindigkeit in Richtung p resultiert.

Für den Fachmann ist nun ersichtlich, welche Erzeugendenradien und Krümmungsradien die Maximalradien, Minimalradien und Wendepunkte der Wälzkurven bzw. Unrundzahnräder 1,3 haben müssen, damit eine optimale Kompensation des Polygoneffektes bei einem bestimmten Kettenrad erzielt wird.

In Figur 1 ist das Übersetzungsverhältnis zwischen dem Unrundzahnrad 3 und dem Unrundzahnrad 1 iᵤ=3:1. Das abtriebsseitige Unrundzahnrad 3 ist mit dem Kettenrad 11 über ein Transmissionsmittel 8 verbunden. Daher muss der Winkel τ₁, über den sich das Wälzkreissegment 4 des zweiten Unrundzahnrades 3 erstreckt, genau so groß wie der Winkel α₁ tief zwischen zwei Zähnen 13 des Kettenrades 11 sein. Anstelle des Transmissionsmittels kann aber auch ein Zahnradgetriebe verwendet werden oder das Unrundzahnrad und das Kettenrad sind auf einer gemeinsamen Welle angeordnet.

Figur 2 zeigt eine alternative Ausführungsform eines Antriebsstrangs 20. Gleiche Teile sind mit gleichen Bezugszeichen versehen. Auch hier wird die Kette 12 mittels der Zähne 13 des Kettenrades 11 in Transportrichtung p bewegt. Abweichend von der Ausführungsform nach Figur 1 ist das abtriebsseitige Unrundzahnrad 23 über ein insgesamt mit 15 bezeichnetes Übersetzungsgetriebe mit dem Kettenrad 11 gekoppelt. Das Übersetzungsgetriebe 15 besteht in an sich bekannter Weise aus Zahnrädern, Riemen, Ketten oder ähnlichem und kann ein- oder mehrstufig ausgeführt sein. Das abtriebsseitige Unrundzahnrad 23 hat hier nur 3 Wälzkreissegmente 24 mit Wälzkurvenabschnitten 24', die sich über den Winkelbereich τ₂ erstrecken. Das Übersetzungsgetriebe hat ein Übersetzungsverhältnis von i_{K} = τ₂/α₂ Insgesamt dreht sich daher das Kettenrad 11 um den Winkel α₂, wenn sich das abtriebsseitige Unrundrad 23 um den Winkel τ₂ dreht. Das mit dem nicht gezeigten Antriebsmotor gekoppelte antriebsseitige Unrundzahnrad 21 ist zwar wie bei der Ausführungsform nach Fig. 1 ellipsenartig und aus zwei Wälzkreissegmenten 22 aufgebaut, die Abmessungen der Haupt- und Nebenachse bzw. des Erzeugendenradius U des Unrundrades 21 sind aber an die veränderte Kurvengeometrie des Wälzkreissegmentes 24 angepasst.

Bei beiden Ausführungsformen versteht es sich, dass das Übersetzungsverhältnis iᵤ zwischen den Unrundzahnrädern vergleichsweise frei gewählt werden kann, so dass insgesamt der Antrieb sehr flexibel an die optimale Motordrehzahl des Antriebsmotors angepasst werden kann. Für ein Kettenrad mit veränderter Zähnezahl oder verändertem Durchmesser sind andere Wälzkurven und Erzeugendenradien für die Unrundzahnräder zum Ausgleich des Polygoneffektes erforderlich.

## Patentansprüche

1. Antrieb für eine Kette mit periodisch angeordneten Kettengliedern, dessen Antriebsstrang von einem Antriebsmotor angetrieben wird und ein Kettenrad umfasst, welches mit der Kette kämmt und von dieser teilweise umschlungen wird, ***dadurch gekennzeichnet, dass*** der Antriebsstrang (10; 20) mindestens ein antriebsseitiges Unrundzahnrad (1; 21) und mindestens ein abtriebsseitiges Unrundzahnrad (3; 23), deren Wälzkurven sich mit variablem Radialabstand berühren, aufweist.

2. Antrieb nach Anspruch 1, ***dadurch gekennzeichnet, dass*** die Kette ein Ziehtrieb einer Ziehmaschine zum Ziehen von Ziehgut, wie Stangen-, Rohr-, Rund- und Profilmaterial ist.

3. Antrieb nach einem der Ansprüche 1 oder 2, ***dadurch gekennzeichnet, dass*** der Umfang wenigstens eines der Unrundräder (1, 3; 21, 23) eine Periodizität einer Winkelfunktion r (ϕ) aufweist und diese Periodizität der Periodizität der Kettenglieder entspricht.

4. Antrieb nach einem der Ansprüche 1 bis 3, ***dadurch gekennzeichnet, dass*** der Antrieb ein mehrere Kettenzähne aufweisendes Kettenrad, insbesondere ein Kettenrad einer Kettenziehvorrichtung, umfasst, welches eine, vorzugsweise endlose umlaufende Kette (12) antreibt.

5. Antrieb nach einem der Ansprüche 1 bis 4, ***dadurch gekennzeichnet, dass*** die Wälzkurvenabschnitte (2', 4'; 22', 24') des antriebsseitigen und des abtriebsseitigen Unrundrades (1, 3; 21, 23) gleiche Wälzkurvenlängen aufweisen.

6. Antrieb nach einem der Ansprüche 1 bis 5, ***dadurch gekennzeichnet, dass*** das antriebsseitige Unrundrad (1; 21) weniger Wälzkreissegmente (2; 22) als das abtriebsseitige Unrundrad (3; 23) aufweist.

7. Antrieb nach einem der Ansprüche 1 bis 6, ***dadurch gekennzeichnet, dass*** die Anzahl der Wälzkreissegmente (4; 24) des abtriebsseitigen Unrundrades (3; 23) der Anzahl der Kettenzähne (13) entspricht.

8. Antrieb nach Anspruch 7, ***dadurch gekennzeichnet, dass*** das abtriebsseitige Unrundrad (3) und das Kettenrad (11) auf einer gemeinsamen Welle angeordnet oder durch ein Zahnradgetriebe oder ein Transmissionsmittel (14), wie einen Riemen, miteinander gekoppelt sind.

9. Antrieb nach einem der Ansprüche 1 bis 8, ***dadurch gekennzeichnet, dass*** zwischen dem abtriebsseitigen Unrundrad (3; 23) und dem Kettenrad (13) ein Übersetzungsgetriebe (15) mit einem Übersetzungsverhältnis von (i_{K}) zwischengeschaltet ist, wobei das Übersetzungsverhältnis aus dem Winkelbereich (τ₂) der Wälzkreissegmente (4; 24) des abtriebsseitigen Unrundrades (3; 23) und dem Teilungswinkel (α₂) des Kettenrades (13) festgelegt ist.

10. Antrieb nach Anspruch 9, ***dadurch gekennzeichnet, dass*** das Übersetzungsverhältnis (i_{K}) ganzzahlig ist.

11. Antrieb nach einem der Ansprüche 9 oder 10, ***dadurch gekennzeichnet, dass*** das Übersetzungsgetriebe (15) ein ein- oder mehrstufiges Zwischengetriebe ist.

12. Antrieb nach einem der Ansprüche 1 bis 11, ***dadurch gekennzeichnet, dass*** die Wälzkurvenabschnitte (4'; 24') der Wälzkreissegmente (4; 24) des abtriebsseitigen Unrundrades (3; 23) zwei Wendepunkte (9, 9') aufweisen.

13. Antrieb nach einem der Ansprüche 1 bis 12, ***dadurch gekennzeichnet, dass*** der Abstand zwischen den Drehachsen (5; 6) der Unrundräder (1, 3; 21, 23) konstant ist.

14. Antrieb nach einem der Ansprüche 1 bis 13, ***dadurch gekennzeichnet, dass*** die Kette mit einer speziellen Kettenführung an das Kettenrad herangeführt ist.

15. Verfahren zum Antrieb einer Kette mit periodisch angeordneten Kettengliedern, insbesondere eines Kettentriebs, ***dadurch gekennzeichnet, dass*** in einem Antriebsstrang, Unrundzahnräder, deren Wälzkurven sich mit variablem Radialabstand berühren, eine periodisch veränderliche Drehzahl erzeugen und der Antriebsstrang diese Drehzahl auf ein von der Kette umschlungenes Kettenrad (13) überträgt, wobei die Periodizität der Drehzahl auf die Periodizität der Kettenglieder abgestimmt ist.

## Claims

1. A drive for a chain with periodically disposed chain links the drivetrain of which is driven by a drive motor and includes a chain wheel that engages the chain and is partially wrapped around it, ***characterized in that*** the drivetrain (10; 20) comprises at least one noncircular gearwheel on the driving side (1; 21) and at least one noncircular gearwheel on the driven side (3; 23), the pitch curves of which are in contact at a variable radial distance.

2. The drive according to claim 1, ***characterized in that*** the chain is a traction drive of a drawing machine for drawing work to be drawn such as bars, pipes, round and profile materials.

3. The drive according to one of the claims 1 or 2, ***characterized in that*** the circumference of at least one of the noncircular wheels (1, 3; 21, 23) comprises a periodicity of a trigonometrical function r (ϕ) and this periodicity corresponds to the periodicity of the chain links.

4. The drive according to one of the claims 1 to 3, ***characterized in that*** the drive includes a chain wheel, more specifically a chain wheel of a chain traction device, comprising a plurality of chain cogs, said chain wheel driving a preferably revolving endless chain (12).

5. The drive according to one of the claims 1 to 4, ***characterized in that*** the pitch curve portion (2', 4'; 22', 24') of the noncircular wheels on the driving and on the driven side (1, 3; 21, 23) comprise the same pitch curve length.

6. The drive according to one of the claims 1 to 5, ***characterized in that*** the noncircular wheel on the driving side (1; 21) comprises less pitch circle segments (2; 22) than the noncircular wheel on the driven side (3; 23).

7. The drive according to one of the claims 1 to 6, ***characterized in that*** the number of pitch circle segments (4; 24) of the noncircular wheel on the driven side (3; 23) equals the number of chain cogs (13).

8. The drive according to claim 7, ***characterized in that*** the noncircular wheel on the driven side (3) and the chain wheel (11) are disposed on a common shaft or are coupled to each other by a toothed gearing or by a transmission means (14) such as a driving belt.

9. The drive according to one of the claims 1 to 8, ***characterized in that*** a transmission gear (15) with a gear ratio of (i_{K}) is inserted between the noncircular wheel on the driven side (3; 23) and the chain wheel (13), the gear ratio being determined from the angular range (τ₂) of the pitch circle segments (4; 24) of the noncircular wheel on the driven side and the angular pitch (α₂) of the chain wheel (13).

10. The drive according to claim 9, ***characterized in that*** the gear ratio (i_{K}) is a integer number.

11. The drive according to one of the claims 9 or 10, ***characterized in that*** the transmission gear (15) is a single or multiple-stage intermediate gear.

12. The drive according to one of the claims 1 to 11, ***characterized in that*** the pitch curve portions (4'; 24') of the pitch circle segments (4; 24) of the noncircular wheel on the driven side (3; 23) comprise two inflection points (9,9').

13. The drive according to one of the claims 1 to 12, ***characterized in that*** the distance between the rotational axes (5; 6) of the noncircular wheels (1, 3; 21, 23) is constant.

14. The drive according to one of the claims 1 to 13, ***characterized in that*** the chain is led to the chain wheel by a special chain guide.

15. A method for driving a chain with periodically disposed chain links, more specifically a chain drive, ***characterized in that,*** in a drive train, noncircular gearwheels the pitch curves of which are in contact at a variable radial distance generate a periodically varying rpm and that the drivetrain transmits this rpm to a chain wheel (13) around which the chain is wrapped, the periodicity of the rpm matching to the periodicity of the chain links.

## Revendications

1. Entraînement pour une chaîne ayant des maillons de chaîne disposés périodiquement dont groupe motopropulseur est actionné par un moteur d'entraînement et comprend une roue à chaîne en prise la chaîne et partiellement entourée par celle-ci, ***caractérisé en ce que*** groupe motopropulseur (10 ; 20) comporte au moins une roue dentée non circulaire côté entraînement (1 ; 21) et au moins une roue dentée non circulaire côté sortie (3 ; 32) dont les courbes primitives se touchent à une distance radiale variable.

2. Entraînement selon la revendication 1, ***caractérisé en ce que*** la chaîne est un entraînement à traction d'un banc d'étirage pour étirer des ébauches qu'il y a lieu d'étirer telles que des barres, des tubes, des ronds et des profilés.

3. Entraînement selon l'une quelconque des revendications 1 ou 2, ***caractérisé en ce que*** le périmètre d'au moins l'une des roues non circulaires (1, 3 ; 21, 23) comprend une périodicité d'une fonction trigonométrique r (ϕ) et que cette périodicité correspond à la périodicité des maillons de chaîne.

4. Entraînement selon l'une quelconque des revendications 1 à 3, ***caractérisé en ce que*** l'entraînement comporte une roue à chaîne comprenant plusieurs dents d'engrenage, notamment une roue à chaîne d'un dispositif de traction à chaîne qui actionne une chaîne (12) défilant de préférence en continu.

5. Entraînement selon l'une quelconque des revendications 1 à 4, ***caractérisé en ce que*** les portions de courbe primitive (2', 4' ; 22', 24') de la roue non circulaire côté entraînement et côté sortie (1, 3 ; 21, 23) comportent la même longueur de courbe primitive.

6. Entraînement selon l'une quelconque des revendications 1 à 5, ***caractérisé en ce que*** la roue non circulaire côté entraînement (1 ; 21) comporte moins de segments de cercle primitif (2 ; 22) que la roue non circulaire côté sortie (3 ; 23).

7. Entraînement selon l'une quelconque des revendications 1 à 6, ***caractérisé en ce que*** le nombre de segments de cercle primitif (4 ; 24) de la roue non circulaire côté sortie (3 ; 23) correspond au nombre de dents d'engrenage (13).

8. Entraînement selon la revendication 7, ***caractérisé en ce que*** la roue non circulaire côté sortie (3) et la roue à chaîne (11) sont disposées sur un arbre commun ou sont couplées l'une à l'autre par un engrenage ou par un moyen de transmission (14) tel qu'une courroie.

9. Entraînement selon l'une quelconque des revendications 1 à 8, ***caractérisé en ce qu'un*** multiplicateur de vitesse (15) ayant un rapport multiplicateur de (i_{K}) est monté entre la roue non circulaire côté sortie (3 ; 23) et la roue à chaîne (13), le rapport multiplicateur étant déterminé à partir du secteur angulaire (τ₂) des segments de cercle primitif (4 ; 24) de la roue non circulaire côté sortie (3 ; 23) et du pas angulaire (α₂) de la roue à chaîne (13).

10. Entraînement selon la revendication 9, ***caractérisé en ce que*** le rapport multiplicateur (i_{K}) est un nombre entier.

11. Entraînement selon l'une quelconque des revendications 9 ou 10, ***caractérisé en ce que*** le multiplicateur de vitesse (15) est un dispositif de transmission intermédiaire à un ou plusieurs étages.

12. Entraînement selon l'une quelconque des revendications 1 à 11, ***caractérisé en ce que*** les portions de courbe primitive (4' ; 24') des segments de cercle primitif (4 ; 24) de la roue non circulaire côté sortie (3 ; 23) comportent deux points d'inflexion (9, 9').

13. Entraînement selon l'une quelconque des revendications 1 à 12, ***caractérisé en ce que*** la distance entre les axes de rotation (5 ; 6) des roues non circulaires (1, 3 ; 21, 23) est constante.

14. Entraînement selon l'une quelconque des revendications 1 à 13, ***caractérisé en ce que*** la chaîne est guidée vers la roue à chaîne par un guide-chaîne spécial.

15. Procédé d'entraînement d'une chaîne ayant des maillons de chaîne disposés périodiquement, notamment un entraînement par chaîne, ***caractérisé en ce que*** dans un groupe motopropulseur des roues dentées non circulaires dont les courbes primitives se touchent à une distance radiale variable produisent une vitesse de rotation cycliquement variable et que le groupe motopropulseur transmet cette vitesse de rotation à une roue à chaîne (13) entourée par la chaîne, la périodicité de la vitesse de rotation étant réglée sur la périodicité des maillons de chaîne.
